# EUROPEAN PATENT SPECIFICATION

(11) **EP 2 636 522 B1**
(45) Date of publication and mention of the grant of the patent: **28.11.2018**
(21) Application number: 13000092.0
(22) Date of filing: 09.01.2013
(51) Int. Cl.: B32B 27/08, B32B 27/12, B32B 7/14, B32B 37/12

(54) **A method for preparing a thermoplastic resin film laminate**
Herstellungsverfahren für ein thermoplastisches Harzfilmlaminat
Procédé de préparation d'un stratifié de film de résine thermoplastique

(30) Priority: 09.01.2012 CN 201210005351
(43) Date of publication of application: 11.09.2013
(73) Proprietor: PGI Nonwovens (China) Co., Ltd., Suzhou Industrial Park 215126 (CN); Foshan King Wonder New Material Technology Co., Ltd., Guangdong (CN)
(72) Inventor: Jin, Yongji, 215126 Suzhou Industrial Park (CN); Erlandsson, Sven Krister Mikael, 215126 Suzhou Industrial Park (CN); Lin, Yuwei, 528000 Foshan (CN); Cai, Zhaohui, 528000 Foshan (CN)
(74) Representative: Grünecker Patent- und Rechtsanwälte PartG mbB

(56) References cited:
- CN-C- 1 229 222
- US-A- 5 445 874

## Description

### Technical Field

The present invention relates to a method for preparing a thermoplastic resin film laminate. To be more specific, the present invention relates to a method for bonding a laminate of a thermoplastic resin film, a thermoplastic resin product and an adhesive.

### Background Art

Bonding products of thermoplastic resin film and thermoplastic resin product generally have the problems like a crimple appearance, curling inside the film, stiff handfeel, insufficient glue fastness, glue failure, etc. These problems bring huge pressure on technologies, markets, costs and etc., mainly because thermoplastic resin films have different elasticity as compared with fabric products, e.g., the differentiations between elastic film and unelastic fabric, stiff film and elastic fabric, ultra-thin film and ultra-thin fabric, film and ultra-thin fabric, elastic film and unelastic film. In the meantime, different glues have different behaviours after bonding, which is another cause of the above-stated problems.

CN 1111476C discloses a method for preparing a stretched breathable polyolefin film and fiber polyolefin nonwoven. As these two can hardly be thermally bonded, bonding is completed by adding adhesives to one or two layers there between. The peeling strength of the resulting product is improved, but is still relatively low. Further, as the gram per square meter weight of the film needs to be lower than 35 g/m², the problems stated above cannot be avoided.

CN 1229222C adopts a similar method, wherein a certain amount of adhesive is added to the formula of polyether-ester film and said film is directly laminated on a fabric material. With this method the cost of glue is lowered, but the function of film is damaged. Besides, the peeling strength of glue used in the later stage is not as good as those gel-type adhesives, resulting in problems like glue failure, curling, etc.

CN 1585844A only discloses heat setting of a polyether-ester fiber after dying, in order to maintain elasticity, flexibility and no curling. Nevertheless, it does not disclose application to its bonding products.

US 6,187,696 B1 discloses bonding nonwoven with thermoplastic resin film using melt adhesive. It mainly explains the properties of the bonding products. US 6,998, 081 only discloses surface heating PP fiber bands or pipes in the drying tunnel after they are molded, so as to address shrinking problems caused by moisture and heat.

DE 19919357 discloses heat setting of PET resin film, and also discloses an apparatus consisting of drying oven and guide roller, aiming to solve crystallization and shrinking of film.

US 5,376,430 discloses bonding polyolefin film with pressure-sensitive adhesive and bonding elastic films like polyurethane. It discloses back gluing pressure-sensitive adhesive on the surface of polyolefin film, and then bonding. It does not mention or disclose solutions for surface crimpling, curling, or glue failure. US 5,445,874 only relates to bonding with polyurethane adhesive.

The prior art mainly focuses on modification of thermoplastic resin formula, mainly for the purposes to improve heat setting and heat shrinking rate of thermoplastic resin film or product.

Those problems commonly seen in bonding nonwoven with various thermoplastic resin films, e.g., a crimple appearance, curling inside the film, insufficient glue fastness, and glue failure, are still big troubles in the industry and causes of high defect rate. For laminates generally used as disposable products, increasing the amount of glue or changing the type of glue brings pressure to costs and greatly lowers maintenance of the film's functions, e.g., moisture transmission. Woven fabric products, when bonded with thermoplastic resin films, e.g., polyurethane film or polyether-ester film, may easily cause curling inside the film, stiff handfeel or other problems, making later stage cutting inconvenient and comfort descend. As such, it increases the bonding costs and gives huge pressure on achieving a stable technology and precise controlling of tensile force, hindering development of the market. Thermoplastic resin film has similar problems when bonding with other materials using pressure-sensitive adhesives, and thus has a stringent requirement on the type of pressure-sensitive adhesive to be used, greatly elevating technical requirements and limiting application of thermoplastic resin films. In view of the above, the solution of such problems has become strong demand of various industries.

### Contents of the Invention

The present invention aims to provide a method for preparing a thermoplastic resin film laminate with smooth and non-crimpled appearance, no curling, soft handfeel, enhanced glue fastness, and no glue failure problems.

To achieve the above purpose of the invention, this invention provides a method for preparing a thermoplastic resin film laminate in accordance with claim 1. Preferred embodiments of this method are specified in dependent claims 2 to 19.

In the laminate of the present invention, the thermoplastic resin product layer is a thermoplastic resin film or thermoplastic resin fabric, while said thermoplastic resin fabric is a woven fabric and/or a nonwoven.

In the laminate of the present invention, when the thermoplastic resin product layer is a fabric, it has a gram per square meter weight of 1-250 g/m², preferably 1-100 g/m², more preferably 5-60 g/m². The gram per square meter weight of the bonding layer is more than 0.1 g/m², preferably 0.8g/m²-15 g/m², more preferably 0.8g/m²-10 g/m².

In the laminate of the present invention, the thermoplastic resin film layer has a thickness of 1-250 µm, preferably 1-100 µm, more preferably 2-50 µm.

In the laminate of the present invention, when the thermoplastic resin product layer is also a thermoplastic resin film, identically, the thermoplastic resin film has a thickness of 1-250 µm, preferably 1-100 µm, more preferably 2-50 µm.

In the laminate of the present invention, the thermoplastic resin film material can be any thermoplastic plastics and its derivatives and mixtures, preferably polyolefin and its derivatives and mixtures, polyvinyl acetate and its derivatives and mixtures, PVC and its derivatives and mixtures, polyvinyl alcohol and its derivatives and mixtures, polyethylene terephthalate and its derivatives and mixtures, and polybutylene terephthalate and its derivatives and mixtures. The thermoplastic resin film material can be any thermoplastic elastomer and its derivatives and mixtures, preferably polyether-ester and its derivatives and mixtures, polyether-ester amide and its derivatives and mixtures, polyurethane and its derivatives and mixtures, TPO (thermoplastic polyolefin elastomer) and its derivatives and mixtures, as well as TPV (thermoplastic vulcanized rubber) and its derivatives and mixtures thereof.

In the laminate of the present invention, the fabric can be a woven fabric or nonwoven, wherein the woven fabric can be any fabric material, preferably polyether-ester and its derivative fibers, polyester and its derivative fibers, nylon and its derivative fibers, polyurethane and its derivative fibers, and polypropylene and its derivative fibers; nonwoven can be any nonwoven, preferably nonwoven of polyolefin and its derivative nonwoven, nonwoven of polyester and its derivative nonwoven, nonwoven of nylon and its derivative nonwoven, nonwoven of spunlace and its derivative nonwoven, nonwoven of degradable plant fiber and its derivative nonwoven, more preferably polypropylene nonwoven, polyester nonwoven, nonwoven of degradable plant fiber and its derivative nonwoven, etc.

In the laminate of the present invention, the glue used can be any glue, preferably solvent adhesive, water-based adhesive, hot melt adhesive, and solventless adhesive. The solvent adhesive includes reactive and unreactive adhesive, preferably moisture-reactive polyurethane glue, bi-component polyurethane glue, siloxane pressure-sensitive adhesive, rubber pressure-sensitive adhesive, polyester pressure-sensitive adhesive, polyester solvent adhesive, rubber solvent adhesive; water-based adhesive is preferably water-based acrylic acid glue, polyurethane glue, olefin hot melt adhesive, polyurethane hot melt adhesive, thermoplastic elastomer glue, rubber, polyester, pressure sensitive adhesive, etc.; hot melt adhesive is preferably polyurethane reactive glue, polyester, amide, olefin like SBS (styrene-butadiene-styrene), SIS (styrene-isoprene-styrene), SEBS (styrene-ethylene-butylene-styrene), acrylic acids pressure sensitive adhesive, etc.

Preferably, in the laminate of the present invention, the bonding layer is a non-continuous layer to enhance laminate's performances of air and moisture transmission. More preferably, the bonding layer is non-continuous dot layer, or strip layer with bars or grid layer.

The laminate of the present invention may be a laminate comprising a thermoplastic resin film layer, a thermoplastic resin product layer and a bonding layer; or a laminate wherein the thermoplastic resin film lies between two layers of thermoplastic resin products layers and the layers are bonded with bonding layers respectively; or a laminate of more layers. For laminates with multiple layers, the materials used for bonding can be textile fabrics or nonwoven, or a mixture thereof.

The laminate of the present invention, no matter how many layers are bonded therein, after-treatment is required after bonding the thermoplastic resin films. Said after-treatment is especially a thermal compressing after-treatment.

The method for preparing the above-said thermoplastic resin film laminate comprises the following steps:
(1) providing thermoplastic resin film layer with a thickness of 1-250 µm;
(2) coating the thermoplastic resin film layer with a bonding layer of glue;
(3) applying thermoplastic resin product layer on the thermoplastic resin film layer coated with the bonding layer of glue, to thereby bond the thermoplastic resin product layer to the thermoplastic resin film layer;
(4) thermal after-treatment.

Preferably, in the method of the present invention, the thermoplastic resin film layer used in step (1) is a thermoplastic nonporous air transmission film. Tested with ASTM E96-2000 BW, the moisture transmission rate is more than 100 g/m²*24h, preferably 1000 g/m²*24h, more preferably over 5000 g/m²*24h, and even more preferably over 7000 g/m²*24h.

By weight percentage, the components of the film comprise:
10% - 99% polyether-ester thermoplastic elastomer resin;
0.01%-90% inorganic powder material having a grain diameter no more than 100 µm and/or an organic low molecular material having a molecular weight no more than 20000 Daltons; and
0-5% dispersant, which is an organic material containing groups affinitive with polyether-ester thermoplastic elastomers.

The organic low molecular material having a molecular weight of no more than 20,000 Daltons in particular may be selected among oligomeric or low molecular weight polymeric materials, i.e. materials which show a molecular weight distribution. If no compound with a specific molecular weight but with a molecular weight distribution is used as the organic low molecular material as defined herein, the molecular weight is a weight average molecular weight determined by GPC using a test method in accordance with GP/T21863-2008 using as solvent tetrahydrofuran. Suitable examples of such organic low molecular materials having a molecular weight of no more than 20,000 Daltons are polyoxyethylene materials with a weight average molecular weight in the range of from 5,000 to 15,000, preferably about 10,000 Daltons, and polyethylene glycol materials having, in case of very low molecular weight materials, a specific (i.e. defined molecular weight) molecular weight of from 250 Daltons to 1,500 Daltons, or in case of polyethylene glycol materials with a molecular weight distribution, a weight average molecular weight of from 500 to 2,500, preferably 750 to 1,500, and most preferably about 1,000 Daltons.

The above film-making raw materials can be blended in machines with a double screw or a single screw, granulated after pre-blend melting or directly extruded to form films. Optimization is made according to different formulas. For instance, if it is organic low molecular formula, direct extrusion to form films is preferred. For the formula containing inorganic powders, however, it is preferable to pre-blend melting granulate and then to form the film. Film forming by extrusion may adopt multi-layer co-extrusion or single layer extrusion device, wherein the materials of each layer are the same for multi-layer co-extrusion. Preferably, there is single screw multi-layer co-extrusion or single-layer extrusion, more preferably there is one to three-layer extrusion. After that, the non-porous air transmission film is treated with intermediate special working processes such as surface treatment, solvent cleaning, printing, online ripening, and paint coating or adhesive coating, preferably with surface treatment, printing, sizing, and online ripening.

Preferably, in the method of the present invention, the glue coated in step (2) is non-continuous. The coating device can be any gel coating device, preferably roller coating device, spray coating device, slit coating device, and powdering device, etc., more preferably roller coating and spray coating device.

In the method of the present invention, the thermal after-treatment of step (4) can be online thermal treatment or off-line thermal treatment.

There are three critical technological parameters in the above-said thermal after-treatment, namely temperature, pressure and time. The temperature of thermal after-treatment is 10-100°C lower than the melting point of thermoplastic resin film or fiber product, taking the lower melting point of the two as final, preferably 12-90°C, more preferably 15-80°C. The pressure of thermal after-treatment is 0.01-1 MPa, preferably 0.01-0.6 MPa. The time for thermal treatment is 0.001s-3600s. The three factors, temperature, pressure and time, are keys whether the products can be successfully prepared.

The thermal after-treatment device of the present invention is selected from a drying oven or a board press machine.

The bonding products of the present invention have a smooth, non-crimple appearance, no curling, soft handfeel, and an enhanced glue fastness, the testing standard being JIS L 1096. As to handfeel, the elastomer module therein is tested under ASTM D828, and the softness can be tested under ISO 17235-2002. The thinner products take ASTM D828 standard, wherein a smaller value indicates a softer handfeel; the thicker products fit ISO 17235-2002, wherein a greater value indicates a softer handfeel. The above performances can all be closely connected to the technological parameters of thermal after-treatment.

Hereinbelow the present invention is further illustrated in combination with the drawings and embodiments. These embodiments, however, are only explanations of some specific embodiments of the present invention, and shall not be construed as limitation of the present invention.

### Description of the drawings

Fig. 1 is a flowchart for preparing thermoplastic resin film laminate according to an embodiment of the present invention;
Fig. 2 is a flowchart for preparing thermoplastic resin film laminate according to another embodiment of the present invention;
Fig. 3 demonstrates the preparation technology of the present invention.

### Embodiments

In the embodiments below, the gram per square meter weight, peeling strength, evenness, moisture transmission rate, melting point and film thickness are tested as follows:
(1) Testing standard of gram per square meter weight:
   A) Testing device: analytical balance, precision 0.001g;
   B) Sampling standard: starting at 15 mm away from the widthwise edge, sampling every 60 mm widthwise, and sampling every 300 mm lengthwise; the testing sample size is 100x100mm, and the number of samples taken from the widthwise and lengthwise is 100 pieces in total;
(2) Testing standard of peeling strength:
   A) Testing standard: GB8808-1988;
   B) Sampling standard: starting at 15mm away from the widthwise edge, sampling every 150 mm widthwise, and sampling every 500 mm lengthwise; the testing sample size is 15x180mm, and the number of samples taken from the widthwise and lengthwise is 100 pieces in total;
(3) Evenness standard:
   Even appearance, no crease/curling/scratch/pores in the recombined inner film and outer side double-layer nonwoven. Crease and curling are visible by naked eyes. Scratches are visible by naked eyes, and also by watching permeation of liquid when liquid is coated under certain pressure.
(4) Moisture transmission rate:
   In accordance with the ASTM E96 steamed water transmission Method, air speed being 1m/s, moisture rate being 50%, temperature being 23°C, the moisture device being produced by Eastern Asia Precision Machine Corporation.
(5) Layer thickness:
   The layer thickness is determined in accordance with the standard test method as defined in GB6672-2001.
(6) Melting point:
   Melting point was determined DSC in accordance with the standard test method ISO-11357.

### Example 1 (reference example)

A 12 µm polyurethane thermoplastic resin film and a 190 g/m² gram per square meter weight polyester two-way spandex knitted fabric are dotted micro gravure bonded with reactive type hot melt polyurethane adhesive. The glue has a gram per square meter weight of 6 g/m², the speed of the production line is 30m/min. The bonded product is thermally after-treated on-line (by thermal pressure roller), the temperature being 100°C, pressure being 1.0MPa, cooled, rolled up and matured with glue. The product obtained has a smooth surface, the material is not curled at film-side, the test result of softness ISO 17235-2002 is 3.4, the test result of peeling strength GB8808-1988 is 6.0N/15cm. The test result of softness of the bonding product that is not thermally after-treated on-line is 2.9, the average of the test results of the peeling strength GB8808-1988 is 4.5N/15cm, with a curling appearance.

### Example 2 (reference example)

A 5 µm polyether-ester thermoplastic resin film and a 40 g/m² polyolefin PP nonwoven are spray coating bonded with SIS type hot melt adhesive. The glue has a gram per square meter weight of 0.8 g/m², the speed of the production line is 100m/min. The bonded product is thermally after-treated on-line (by thermal pressure roller), the temperature being 100°C, pressure being 1.0MPa, cooled and rolled up. The product obtained has a smooth surface, the material is not curled at film-side, the test result of softness ISO 17235-2002 is 6.2, the test result of peeling strength JIS L1096 is 1.2 N/15cm. The test result of softness of the bonding product that is not thermally after-treated on-line is 5.0, the average of the test results of the peeling strength GB8808-1988 is 0.9 N/15cm.

### Example 3 (reference example)

The film surface of the bonded product prepared by Example 2 continues to be spray coating bonded with 20 g/m² polyolefin PP nonwoven are spray coating with SIS type hot melt adhesive. The glue has a gram per square meter weight of 1 g/m², the speed of the production line is 100m/min. The bonded product is thermally after-treated on-line (by thermal pressure roller), the temperature being 100°C, pressure being 1.0MPa, cooled and rolled up. The product obtained has a smooth surface, the nonwoven is not curled at film-side, the test result of softness ISO 17235-2002 is 5.2, the test result of peeling strength GB8808-1988 is 0.8 N/15cm. The test result of softness of the bonding product that is not thermally after-treated on-line is 4.8, the average of the test results of the peeling strength GB8808-1988 is 0.6 N/15cm.

### Example 4 (reference example)

The technological temperature of Example 2 is changed to 120°C. The product obtained also has a smooth surface, the nonwoven is not curled at film-side, and there is no glue failure. The test result of softness ISO 17235-2002 is 6.8, the average test result of peeling strength GB8808-1988 is 1.8 N/15cm. Compared with the test results of Example 2, the temperature elevation enhances the product's softness and peeling strength.

### Example 5 (reference example)

The technological temperature of Example 2 is changed to 140°C. The product obtained also has a smooth surface, the nonwoven is not curled at film-side, and there is no glue failure. The test result of softness ISO 17235-2002 is 5.0, the average test result of peeling strength GB8808-1988 is 0.8 N/15cm. Compared with the test results of Example 2, when the temperature is elevated closer to the melting point of polypropylene nonwoven, the product resulted will be more rigid and the peeling strength will be weakened.

### Example 6 (reference example)

The technological pressure of Example 2 is changed to 0.6 MPa. The product obtained also has a smooth surface, the nonwoven is not curled at film-side, and there is no glue failure. The test result of softness ISO 17235-2002 is 6.2, the average test result of peeling strength GB8808-1988 is 1.0 N/15cm. Compared with the test results of Example 2, the pressure decrease will result in weakening of the peeling strength.

### Example 7 (reference example)

The production speed of Example 2 is changed to 50 m/min. The product obtained also has a smooth surface, the nonwoven is not curled at film-side, and there is no glue failure. The test result of softness ISO 17235-2002 is 6.2, the average test result of peeling strength GB8808-1988 is 1.5 N/15cm. Compared with the test results of Example 2, the peeling strength is slightly improved.

### Example 8 (reference example)

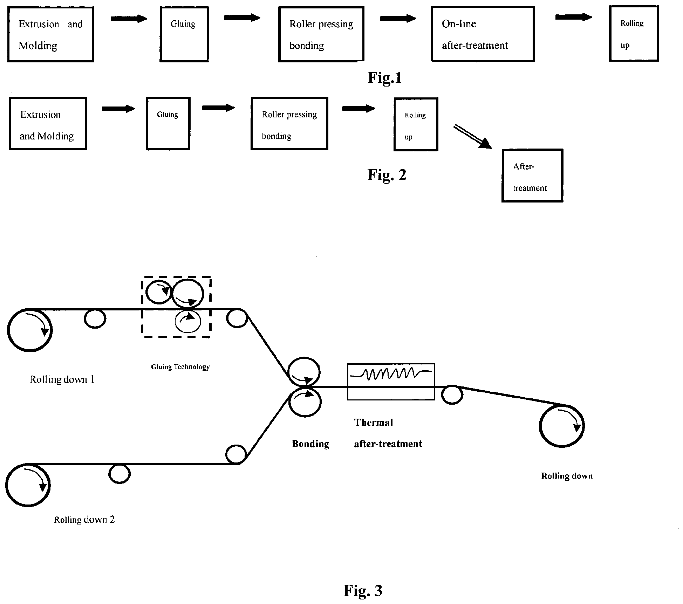

The thermoplastic resin film and nonwoven of Example 2 are bonded and directly rolled up according to the flowchart of Fig.2. It is rested for 1h, 24h, 48h, and 30 days, and then after-treated. Similarly, the product obtained has a smooth surface, the nonwoven is not curled at film-side, and there is no glue failure. The softness and peeling strength is similar to or the same as those of Example 2.

### Example 9

The thermoplastic resin film and nonwoven of Example 1 are bonded and directly rolled up according to the flowchart of Fig. 2. It is matured with glue in the maturing room, and rolled up for thermal after-treatment (after-treatment in oven), the temperature being 100°C, and the pressure inside the oven is IMPa. Thirty minutes later test results are obtained which are similar to those of Example 1.

### Example 10 (reference example)

A 15 µm polyethylene thermoplastic resin transparent film and a 20 µm PET thermoplastic resin transparent film are roller coating bonded with solvent-type polyurethane glue according to the flowchart of Fig. 1, the glue having a gram per square meter weight of 2 g/m². After bonding, it is directly after-treated on line, the temperature being 80°C, the pressure being 0.1MPa, and the speed being 60m/min, resulting in a bonding product of which the PET film is not curled toward the polyethylene film, and which has a smooth surface. The test result of peeling strength GB8808-1988 is 21.5 N/15cm. The average test results of peeling strength of the product that is not thermally after-treated is 15 N/15cm.

### Example 11 (reference example)

A 15 µm polyethylene thermoplastic resin matte film and a 5 µm polyether-ester thermoplastic resin matte film are roller coating bonded with water-based acrylic acid pressure-sensitive adhesive according to the flowchart of Fig. 1, the glue having a gram weight of 1g/m². After bonding, it is directly after-treated on line (by thermal pressure roller), the temperature being 90°C, the pressure being 0.1MPa, and the speed being 80m/min, resulting a product having a smooth surface, no curling, and no glue failure with long-term tension free stay. The test result of peeling strength GB8808-1988 average 0.5 N/15cm. The test results of peeling strength of the product that is not thermally after-treated average 0.1 N/15cm. The test result of elasticity modulus ASTM D828 is 75 MPa/80MPa, and the test result of the one that is not thermally after-treated is 100MPa/120MPa.

### Example 12

The on-line thermal after-treatment of Example 1 is changed to a board press device, and similar results are obtained.

### Example 13 (reference example)

A 5 µm polyether-ester thermoplastic resin film and a 23 g/m² polypropylene spunbond (PP spunbond) are Gravure roller coated with water-based acrylic acid hydrosol, and bonded after drying, the glue having a gram per square meter weight of 1.3 g/m², the speed of the production line being 100m/min. The bonded product is thermally after-treated on-line (by thermal pressure roller), the temperature being 120°C, pressure being 0.6MPa, cooled and rolled up. The product obtained has a smooth surface, and the nonwoven is not curled at film-side. The test result of softness ISO 17235-2002 is 4.8, the test results of peeling strength GB8808-1988 average 0.7N/15cm, and the moisture-transmission rate is 1036 g/m²*24h. The test result of softness of the bonding product that is not thermally after-treated on-line is 4.1, and the test results of peeling strength GB8808-1988 average 0.3N/15cm, with a curling appearance and a moisture transmission rate of 1012 g/m²*24h.

### Example 14 (reference example)

A 5 µm polyether-ester thermoplastic resin film and a 23 g/m² polypropylene spunbond (PP spunbond) are Gravure roller coated with water-based acrylic acid hydrosol, and bonded after drying, the glue having a gram per square meter weight of 1.3 g/m², the speed of the production line being 100m/min. Placed in well ventilated ordinary environment for 1 min or more, the bonded product is again rolled down to be thermally treated with a thermal pressure roller (by thermal pressure roller), the temperature being 120°, pressure being 0.6MPa, cooled and rolled up. The product obtained has a smooth surface, and the nonwoven is not curled at film-side. The test result of softness ISO 17235-2002 is 4.8, the test results of peeling strength GB8808-1988 average 0.7N/15cm. The performance of the bonding product that is not thermally after-treated on-line is the same as that of Example 13.

### Examples 15 and 16 (reference examples)

The bonding products of Examples 13 and 14 are re-bonded with 23 g/m² polypropylene spunbond (PP spunbond), the re-bonding technologies are respectively the same as those in Examples 13 and 14. The resulting product has a smooth surface and no curling. The test result of softness ISO 17235-2002 is 4.10, the test results of peeling strength GB8808-1988 average 0.4N/15cm, and the moisture transmission rate is 1010 g/m²*24h. The bonding product that is not thermally after-treated on-line has a test result of softness of 4.1, an average test result of peeling strength GB8808-1988 of 0.3 N/15cm, a wrinkled appearance and a moisture transmission rate of 960 g/m²*24h.

### Examples 17, 18, 19 and 20 (reference examples)

The film of Examples 13 and 14 is changed to a polyether-ester thermoplastic resin film of 10 µm and 15 µm. Basic performances such as the peeling strength, softness and appearance of the resulting products are similar. After thermal treatment, the moisture transmission rate is dropped to 960 g/m²*24h and 900 g/m²*24h.

### Examples 21, 22 and 23 (reference examples)

The nonwoven of Examples 13 and 14 is changed to 40 g/m² white maize degradable nonwoven, 30 g/m² yellow maize degradable nonwoven, 35g/m2 nylon reusable spunlacing nonwoven. The peeling strength is 1.1N/cm, the softness is similar to nonwoven, the appearance is smooth. After thermal treatment, the moisture transmission rate is 1000 g/m²*24h, and 1060 g/m²*24h.

### Examples 24 and 25 (reference examples)

The glue of Example 23 is changed to moisture-reactive type hot melt adhesive and butanone hot melt adhesive. After respective coating and the same treatment, the resulting product has a smooth appearance and no curling. The softness has increased by 0.3, the test result of peeling strength GB8808-1988 average 5.0 N/15cm, there is a wrinkled appearance and the moisture transmission rate is 870 g/m²*24h.

## Claims

1. A method for preparing a thermoplastic resin film laminate by thermal compressing, wherein the laminate comprises:
at least a thermoplastic resin film layer with a thickness of 1-250 µm;
at least a thermoplastic resin product layer;
and a bonding layer of glue in between said thermoplastic resin film layer and said thermoplastic resin product layer;
wherein the thermoplastic resin product layer is of a thermoplastic resin film or thermoplastic resin fabric, wherein said thermoplastic resin fabric is a woven fabric and/or a nonwoven (a non spunbond nonwoven or a material containing spunbond nonwoven structure);
in which laminate said fabric has a gram weight of 1-250g/m², and the bonding layer has a gram weight of more than 0.1g/m²,
wherein, when the thermoplastic resin product layer is a thermoplastic resin film, the thermoplastic resin film has a thickness of 1-250 µm,
wherein the method comprises:
(1) providing a thermoplastic resin film layer with a thickness of 1-250 µm;
(2) coating the thermoplastic resin film layer with a bonding layer of glue;
(3) applying a thermoplastic resin product layer on the thermoplastic resin film layer coated with the bonding layer of glue, to thereby bond the thermoplastic resin product layer to the thermoplastic resin film layer;
(4) thermal after-treatment,
wherein the thermal after-treatment in Step (4) is conducted at a temperature of 10°C-100°C lower than the melting point of thermoplastic resin film layer and thermoplastic resin product layer and at a pressure of 0.01-1MPa, and the thermal after-treatment time ranges from 0.001s-3600s, wherein the thermal after-treatment is conducted with a thermal after-treatment device selected from a drying oven or a board press machine.

2. The method of Claim 1, wherein the thermoplastic resin film is a thermoplastic plastics and its derivatives and mixtures selected from: polyolefin and its derivatives, polyvinyl acetate and its derivatives and mixtures, PVC and its derivatives and mixtures, polyvinyl alcohol and its derivatives and mixtures, polyethylene terephthalate and its derivatives and mixtures, and polybutylene terephthalate and its derivatives and mixtures.

3. The method of Claim 1 and/or 2, wherein one or more layers of the thermoplastic resin film are selected from any one or more groups of the following thermoplastic elastomers and their derivatives and mixtures: polyether-ester and its derivatives and mixtures, polyether ester amide and its derivatives and mixtures, polyurethane and its derivatives and mixtures, TPO and its derivatives and mixtures, as well as TPV and its derivatives and mixtures thereof, and any mixtures of the aforesaid materials.

4. The method of Claim 1, 2 and/or 3, wherein one or more layers of the woven fabric layers are selected from any one or more groups of the following fabric materials: polyether-ester and its derivative fiber, polyester and its derivative fiber, nylon and its derivative fiber, polyurethane and its derivative fiber, and polypropylene and its derivative fiber, as well as any mixtures of the aforesaid resin materials.

5. The method of Claim 1, 2, 3 and/or 4, wherein the laminate is prepared with nonwoven (non-spunbond nonwoven or material containing spunbond nonwoven structure), and one of the following thermoplastic resin materials: polyolefin and its derivative nonwoven, polyester and its derivative nonwoven, nylon and its derivative nonwoven, polyurethane and its derivative nonwoven, and mixtures of the aforesaid resin materials, preferably of polypropylene, polyester, and renewable resin and its derivatives.

6. The method of Claim 1, 2, 3, 4 and/or 5, wherein the glue is a solvent adhesive, a water-based adhesive or a solventless adhesive.

7. The method of Claim 1,2, 3, 4, 5 and/or 6, wherein the bonding layer has a gram weight of 0.8g/m²-50g/m².

8. The method of Claim 1, 2, 3, 4, 5, 6 and/or 7, wherein the bonding layer is a non-continuous layer, preferably a non-continuous dot layer, strip layer or grid layer.

9. The method of Claim 1, 2, 3, 4, 5, 6, 7 and/or 8, wherein the laminate is calendar laminated by a thermoplastic resin film layer and thermoplastic resin product layer and then thermally after-treated.

10. The method of any of Claims 1 to 9,
wherein the thermoplastic resin product layer is a thermoplastic resin fabric, and the thermoplastic resin fabric is spunbond nonwoven.

11. The method of Claim 10, wherein the thermoplastic resin film is selected from the following thermoplastic elastomers and their derivatives and mixtures: polyether-ester and its derivatives and mixtures, polyether ester amide and its derivatives, and mixtures of the aforesaid resin materials.

12. The method of Claim 10 and/or 11, wherein there are one or more spunbond nonwoven layers, and it is prepared with thermoplastic resin materials selected from:
polyolefin and its derivatives, polyester and its derivatives, nylon and its derivatives, renewable resin and its derivatives, and mixtures of the aforesaid resin materials.

13. The method of Claim 10, 11 and/or 12, wherein the spunbond nonwoven is a spunbond melt-blown nonwoven.

14. The method of Claims 12-13, wherein said thermoplastic fiber materials comprise: polypropylene and its derivatives, polyethylene and its derivatives, polyester and its derivatives, polybutylene and its derivatives, renewable resin and renewable resin derivatives comprising polylactic acids, as well as mixtures of the aforesaid resin materials.

15. The method of Claim 10, 11, 12, 13 and/or 14, wherein the glue is a solvent adhesive, a water-based adhesive or a solventless adhesive.

16. The method of Claim 10, 11, 12, 13, 14 and/or 15, wherein the bonding layer has a gram weight of 0.8g/m2-50g/m2.

17. The method of Claim 10, 11, 12, 13, 14, 15 and/or 16, wherein the bonding layer is a non-continuous layer, preferably a non-continuous dot layer, strip layer or grid layer.

18. The method of Claim 10, 11, 12, 13, 14, 15, 16 and/or 17, wherein the laminate is calendar laminated by a thermoplastic resin film layer and thermoplastic resin product layer and then thermally after-treated.

19. The method of any of Claims 1 to 18, wherein the glue coated in Step (2) is non-continuous.

## Patentansprüche

1. Verfahren zum Herstellen eines Laminats aus thermoplastischem Harzfilm durch thermische Kompression, wobei das Laminat umfasst:
mindestens eine Schicht aus thermoplastischem Harzfilm mit einer Dicke von 1-250 µm;
mindestens eine Schicht aus thermoplastischem Harzprodukt,
eine Bindungsschicht aus Klebstoff zwischen besagter Schicht aus thermoplastischem Harzfilm und besagter Schicht aus thermoplastischen Harzprodukt;
wobei die Schicht aus thermoplastischem Harzprodukt aus einem thermoplastischen Harzfilm oder thermoplastischen Harzgewebe ist, wobei besagtes thermoplastisches Harzgewebe ein Fasergewebe und/oder ein Faservlies (ein nicht-spinngebundener Faservlies oder ein Material, enthaltend eine spinngebundene Faservliesstruktur) ist;
wobei im Laminat besagtes Gewebe ein Grammgewicht von 1-250g/m² besitzt, und die Bindungsschicht ein Grammgewicht von mehr als 0,1g/m² besitzt,
wobei, wenn die Schicht aus thermoplastischem Harzprodukt ein thermoplastischer Harzfilm ist, der thermoplastische Harzfilm eine Dicke von 1-250 µm besitzt,
wobei das Verfahren umfasst:
(1) Bereitstellen einer Schicht aus thermoplastischem Harzfilm mit einer Dicke von 1-250 µm;
(2) Beschichten der Schicht aus thermoplastischem Harzfilm mit einer Bindungsschicht aus Klebstoff;
(3) Auftragen einer Schicht aus thermoplastischem Harzprodukt auf die Schicht aus thermoplastischem Harzfilm, beschichtet mit der Bindungsschicht aus Klebstoff, wodurch die Schicht aus thermoplastischem Harzprodukt auf die Schicht aus thermoplastischem Harzfilm gebunden wird;
(4) thermische Nachbehandlung,
wobei die thermische Nachbehandlung in Schritt (4) durchgeführt wird bei einer Temperatur von 10°C-100°C niedriger als der Schmelzpunkt der Schicht aus thermoplastischem Harzfilm und der Schicht aus thermoplastischem Harzprodukt und bei einem Druck von 0,01-1 MPa, und wobei sich die Dauer der thermischen Nachbehandlung von 0,001s-3.600s erstreckt, wobei die thermische Nachbehandlung mit einer Vorrichtung zur thermischen Nachbehandlung durchgeführt wird, ausgewählt aus einem Trocknungsofen und einer Plattenpressmaschine.

2. Das Verfahren nach Anspruch 1, wobei der thermoplastische Harzfilm ein thermoplastischer Kunststoff und seine Derivate und Mischungen ist, ausgewählt aus: Polyolefin und seine Derivate, Polyvinylacetat und seine Derivate und Mischungen, PVC und seine Derivate und Mischungen, Polyvinylalkohol und seine Derivate und Mischungen, Polyethylenterephthalat und seine Derivate und Mischungen, und Polybutylenterephthalat und seine Derivate und Mischungen.

3. Das Verfahren nach Anspruch 1 und/oder 2, wobei eine oder mehr Schichten des thermoplastischen Harzfilms aus irgendeiner oder mehr Gruppen der folgenden thermoplastischen Elastomere und deren Derivate und Mischungen ausgewählt sind: Polyether-Ester und seiner Derivate und Mischungen, Polyether-Ester-Amid und seine Derivate und Mischungen, Polyurethan und seine Derivate und Mischungen, TPO und seine Derivate und Mischungen, sowie TPV und seine Derivate und Mischungen, und irgendeine Mischung der vorstehenden Materialien.

4. Das Verfahren nach Anspruch 1, 2 und/oder 3, wobei eine oder mehr Schichten der Fasergewebeschichten aus irgendeiner oder mehreren Gruppen der folgenden Gewebematerialien ausgewählt sind:
Polyether-Ester und seine Faserderivate, Polyester und seine Faserderivate, Nylon und seine Faserderivate, Polyurethan und seine Faserderivate, und Polypropylen und seine Faserderivate, sowie irgendeine Mischung der vorstehenden Harzmaterialien.

5. Das Verfahren nach Anspruch 1, 2, 3 und/oder 4, wobei das Laminat mit Faservlies (nicht-spinngebundener Faservlies oder Material, enthaltend eine spinngebundene Faservliesstruktur) und einem der folgenden thermoplastischen Harzmaterialien hergestellt wird: Polyolefin und seine Faservliesderivate, Polyester und seine Faservliesderivate, Nylon und seine Faservliesderivate, Polyurethan und seine Faservliesderivate, und Mischungen der vorstehenden Harzmaterialien, bevorzugt Polypropylen, Polyester und erneuerbares Harz und seine Derivate.

6. Das Verfahren nach Anspruch 1, 2, 3, 4 und/oder 5, wobei der Klebstoff ein Lösungsmittelhaftvermittler ist, ein wasserbasierter Haftvermittler oder ein lösungsmittelfreier Haftvermittler ist.

7. Das Verfahren nach Anspruch 1, 2, 3, 4, 5 und/oder 6, wobei die Bindungsschicht ein Grammgewicht von 0,8g/m²-50g/m² besitzt.

8. Das Verfahren nach Anspruch 1, 2, 3, 4, 5, 6 und/oder 7, wobei die Bindungsschicht eine nicht-kontinuierliche Schicht, bevorzugt eine nicht-kontinuierliche Punktschicht, Streifenschicht oder Gitterschicht ist.

9. Das Verfahren nach Anspruch 1, 2, 3, 4, 5, 6, 7 und/oder 8, wobei das Laminat mit einer Schicht aus thermoplastischem Harzfilm und einer Schicht aus thermoplastischem Harzprodukt kalenderbeschichtet ist, und dann thermisch nachbehandelt wird.

10. Das Verfahren nach irgendeinem der Ansprüche 1 bis 9,
wobei die Schicht aus thermoplastischem Harzprodukt ein thermoplastisches Harzgewebe ist, und wobei das thermoplastische Harzgewebe ein spinngebundener Faservlies ist.

11. Das Verfahren nach Anspruch 10, wobei der thermoplastische Harzfilm aus den folgenden thermoplastischen Elastomeren und deren Derivaten und Mischungen ausgewählt ist: Polyether-Ester und seine Derivate und Mischungen, Polyether-Ester-Amid und seine Derivate, und Mischungen der vorstehenden Harzmaterialien.

12. Das Verfahren nach Anspruch 10 und/oder 11, wobei eine oder mehr Faservliesschichten anwesend sind, und sie mit thermoplastischen Harzmaterialien hergestellt werden, ausgewählt aus:
Polyolefin und seine Derivate, Polyester und seine Derivate, Nylon und seine Derivate, erneuerbares Harz und seine Derivate, und Mischungen der vorstehenden Harzmaterialien.

13. Das Verfahren nach Anspruch 10, 11 und/oder 12, wobei der Faservlies ein spinngebundener, schmelzgeblasener Faservlies ist.

14. Das Verfahren nach den Ansprüchen 12-13, wobei die thermoplastischen Fasermaterialien umfassen:
Polypropylen und seine Derivate, Polyethylen und seine Derivate, Polyester und seine Derivate, Polybutylen und seine Derivate, erneuerbares Harz und erneuerbare Harzderivate, umfassend Polymilchsäure, sowie Mischungen der vorstehenden Harzmaterialien.

15. Das Verfahren nach Anspruch 10, 11, 12, 13 und/oder 14, wobei der Klebstoff ein Lösungsmittelhaftvermittler ist, ein wasserbasierter Haftvermittler oder ein lösungsmittelfreier Haftvermittler ist.

16. Das Verfahren nach Anspruch 10, 11, 12, 13, 14 und/oder 15, wobei die Bindungsschicht ein Grammgewicht von 0,8g/m²-50g/m² besitzt.

17. Das Verfahren nach Anspruch 10, 11, 12, 13, 14, 15 und/oder 16, wobei die Bindungsschicht eine nicht-kontinuierliche Schicht, bevorzugt eine nicht-kontinuierliche Punktschicht, Streifenschicht oder Gitterschicht, ist.

18. Das Verfahren nach Anspruch 10, 11, 12, 13, 14, 15, 16 und/oder 17, wobei das Laminat mit einer Schicht aus thermoplastischem Harzfilm und einer Schicht aus thermoplastischem Harzprodukt kalenderlaminiert wird, und dann thermisch nachbehandelt wird.

19. Das Verfahren nach irgendeinem der Ansprüche 1 bis 18, wobei der Klebstoff, beschichtet in Schritt (2), nicht-kontinuierlich ist.

## Revendications

1. Procédé de préparation d'un stratifié de film de résine thermoplastique par compression thermique,
dans lequel le stratifié comprend:
au moins une couche de film de résine thermoplastique d'une épaisseur de 1 à 250 µm;
au moins une couche de produit en résine thermoplastique;
et une couche de liaison de colle entre ladite couche de film de résine thermoplastique et ladite
couche de produit en résine thermoplastique;
dans lequel la couche de produit en résine thermoplastique est un film de résine thermoplastique ou un tissu de résine thermoplastique, dans lequel ledit tissu de résine thermoplastique est un tissu et/ou un non-tissé (un non-tissé non filé ou un matériau contenant une structure non tissée filée); dans lequel le stratifié a un grammage de 1-250 g/m² et la couche de liaison a un grammage supérieur à 0,1 g/m²,
dans lequel, lorsque la couche de produit en résine thermoplastique est un film de résine thermoplastique, le film de résine thermoplastique a une épaisseur de 1 à 250 µm,
dans lequel le procédé comprend les étapes suivantes:
(1) fournir une couche de film de résine thermoplastique d'une épaisseur de 1 à 250 µm ;
(2) revêtir la couche de film de résine thermoplastique d'une couche de liaison de colle;
(3) appliquer une couche de produit de résine thermoplastique sur la couche de film de résine thermoplastique revêtue de la couche de liaison de colle, afin de lier ainsi la couche de produit de résine thermoplastique au film de résine thermoplastique;
(4) post-traitement thermique
dans lequel le post-traitement thermique de l'étape (4) est effectué à une température inférieure de 10°C à 100°C au point de fusion de la couche de film en résine thermoplastique et de la couche de produit en résine thermoplastique et à une pression de 0,01-1 MPa, et le temps de post-traitement thermique est compris entre 0,001s et 3600s, le post-traitement thermique étant effectué avec un dispositif de post-traitement thermique choisi parmi un four de séchage ou une machine de presse à plaques.

2. Procédé selon la revendication 1, dans lequel le film de résine thermoplastique est une matière plastique thermoplastique et ses dérivés et mélanges choisis parmi: la polyoléfine et ses dérivés, l'acétate de polyvinyle et ses dérivés et mélanges, le PVC et ses dérivés et mélanges, l'alcool polyvinylique et ses dérivés et mélanges, le polyéthylène téréphtalate et ses dérivés et mélanges, et le polybutylène téréphtalate et ses dérivés et mélanges.

3. Procédé selon les revendications 1 et/ou 2, dans lequel une ou plusieurs couches de film résine thermoplastique sont choisies parmi un ou plusieurs groupes des élastomères thermoplastiques suivants et leurs dérivés et mélanges: le polyétherester et ses dérivés et mélanges, le polyéther esteramide et ses dérivés et mélanges, le polyuréthane et ses dérivés et mélanges, le TPO et ses dérivés et mélanges, ainsi que le TPV et ses dérivés et leurs mélanges, ainsi que tout mélange des matériaux précités.

4. Procédé selon les revendications 1, 2 et/ou 3, dans lequel une ou plusieurs couches du tissu tissé sont choisies parmi un ou plusieurs groupes des matériaux tissés suivants:
le polyéther-ester et ses fibres dérivées, le polyester et ses fibres dérivées, le nylon et ses fibres dérivées, le polyuréthane et ses fibres dérivées, et le polypropylène et ses fibres dérivées, ainsi que tout mélange des matériaux résineux précités.

5. Procédé selon les revendications 1, 2, 3 et/ou 4, dans lequel le stratifié est préparé avec un non-tissé (non tissé par filage-nappage ou matériau contenant une structure non tissée par filage-nappage) et l'un des matériaux résineux thermoplastiques suivants: la polyoléfine et son non-tissé dérivé, le polyester et ses dérivés non tissés, le nylon et ses dérivés non tissés, le polyuréthane et ses dérivés non tissés, et les mélanges des matériaux résineux précités, de préférence le polypropylène, le polyester et la résine renouvelable et ses dérivés.

6. Procédé selon les revendications 1, 2, 3, 4 et/ou 5, dans lequel la colle est un adhésif solvant, un adhésif à base d'eau ou un adhésif sans solvant.

7. Procédé selon les revendications 1, 2, 3, 4, 5 et/ou 6, dans lequel la couche de liaison a un grammage de 0,8 g/m² - 50g/m².

8. Procédé selon les revendications 1, 2, 3, 4, 5, 8 et/ou 7, dans lequel la couche de liaison est une couche non continue, de préférence une couche de points non continue, une couche de bande ou une couche de grille.

9. Procédé selon les revendications 1, 2, 3, 4, 5, 6, 7 et/ou 8, dans lequel le stratifié est le calendrier stratifié par une couche de film en résine thermoplastique et une couche de produit en résine thermoplastique, puis thermiquement après traitement.

10. Procédé selon l'une quelconque des revendications 1 à 9, dans lequel la couche de produit en résine thermoplastique est un tissu en résine thermoplastique et le tissu en résine thermoplastique est non tissé par filage-nappage.

11. Procédé selon la revendication 10, dans lequel le film de résine thermoplastique est choisi parmi les élastomères thermoplastiques suivants et leurs dérivés et mélanges: le polyétherester et ses dérivés et mélanges, le polyéther ester amide et ses dérivés, et mélanges des matériaux en résine précités.

12. Procédé selon les revendications 10 et/ou 11, dans lequel il existe un ou plusieurs couches non tissées par filage-nappages, et il recourt à des matériaux en résine thermoplastique choisis parmi:
la polyoléfine et ses dérivés, le polyester et ses dérivés, le nylon et ses dérivés, la résine renouvelable et ses dérivés, et les mélanges des matériaux résineux précités.

13. Procédé selon les revendications 10, 11 et/ou 12, dans lequel le non-tissé par filage-nappage est un non-tissé soufflé à l'état fondu par filage-nappage.

14. Procédé selon les revendications 12-13, dans lequel lesdites matières fibreuses thermoplastiques comprennent:
le polypropylène et ses dérivés, le polyéthylène et ses dérivés, le polyester et ses dérivés, le polybutylène et ses dérivés, la résine renouvelable et dérivés de résines renouvelables comprenant
des acides polylactiques, ainsi que des mélanges des matériaux résineux précités.

15. Procédé selon les revendications 10, 11, 12, 13 et/ou 14, dans lequel la colle est un adhésif solvant, un adhésif à base d'eau ou un adhésif sans solvant.

16. Procédé selon les revendications 10, 11,12, 13, 14 et/ou 15, dans lequel la couche de liaison a un grammage de 0,8 g/m² - 50g/m².

17. Procédé selon les revendications 10,11,12,13,14,15 et/ou 16, dans lequel la couche de liaison est une couche non continue, de préférence une couche de points non continue, une couche de bande ou une couche de grille.

18. Procédé selon les revendications 10, 11, 12, 13, 14, 15, 18 et/ou 17, dans lequel le stratifié est le calendrier stratifié par une couche de film en résine thermoplastique et une couche de produit en résine thermoplastique, puis thermiquement après traitement.

19. Procédé selon l'une quelconque des revendications 1 à 18, dans lequel la colle revêtue dans l'étape (2) est non continue.
